# NEUE EUROPÄISCHE PATENTSCHRIFT

(11) **EP 0 936 872 B2**
(45) Veröffentlichungstag und Bekanntmachung des Hinweises auf die Entscheidung über den Einspruch: **12.12.2007**
(45) Hinweis auf die Patenterteilung: 10.01.2001
(21) Anmeldenummer: 97947007.7
(22) Anmeldetag: 17.10.1997
(51) Int. Cl.: A23G 3/00, A23G 3/02

(54) **BONBON-SPIELZEUG**
CANDY-TOY
JOUET-BONBON

(30) Priorität: 18.10.1996 DE 19643088
(43) Veröffentlichungstag der Anmeldung: 25.08.1999
(73) Patentinhaber: Mederer GmbH, 90763 Fürth (DE)
(72) Erfinder: MEDERER, Herbert, D-90768 Fürth (DE)
(74) Vertreter: Rau, Albrecht
(86) Internationale Anmeldenummer: PCT/DE1997/002400
(87) Internationale Veröffentlichungsnummer: WO 1998/017122

(56) Entgegenhaltungen:
- EP-A- 0 349 841
- DE-A- 4 004 688
- SU-A- 1 107 820
- SU-A- 1 777 770
- US-A- 4 911 937
- ANON.: "Two-layer jelly" ZUCKER- UND SÜSSWARENWIRTSCHAFT, Bd. 23, Nr. 2, 1970, Seiten 69-70, XP002055973
- DATABASE FSTA INTERNATIONAL FOOD INFORMATION SERVICE (IFIS), FRANFURT/MAIN, DE 1990 BLAGODATSKIKH V E: "Production of 2-layer sweets" XP002055974 -& SU 1 588 355 A (VNII KONDITERSKOJ PROMY) 23.August 1990
- Farbbroschüre der Firma NID PTY Ltd. (AU), Bulletin No. 811; "giessen in puderformen" aus dem Jahr 1981
- Farbbroschüre der Firma NID PTY Ltd. (AU) zu Mogulsystemen, Bulletin No. 861 G aus dem Jahr 1986

## Beschreibung

Die Erfindung betrifft ein Verfahren zur Herstellung eines Bonbon-Spielzeugs.

Aus dem europäischen Patent 0 349 841 der Anmelderin ist ein Bonbon-Spielzeug bekannt. Dieses bekannte Bonbon-Spielzeug besteht aus einzelnen, gesonderten Lagen, die oberste und die unterste Lage bestehen aus einem Schaumzuckerkörper abgerundeter Form, dazwischen liegen Fruchtgummilagen und dgl. ein.

Als weiterer Stand der Technik sind Bonbons mit einer Mischung aus unterschiedlichen Bonbonmassen bekannt, von denen eine Fruchtgummi und die andere Schaumzuckermasse ist. Beispielsweise werden auf flächige Fruchtgummi-Gießbonbons Ornamente oder Verzierungen aus Schaumzucker aufgebracht, in Umkehrung dazu gibt es großflächige Schaumzuckermassen-Bonbons, die mit Fruchtgummiapplikationen versehen sind. Bei diesem Stand der Technik ist entweder die Schaumzuckermasse auf die Fruchtgummimasse aufgegossen oder umgekehrt.

Der Erfindung liegt die Aufgabe zugrunde, ein Verfahren zur Herstellung eines Bonbon-Spielzeugs zu vereinfachen, ohne daß der gefällige optische Eindruck verloren geht. Diese Aufgabe wird durch Merkmale des Schutzanspruches 1 gelöst, vorteilhafte Weiterbildungen der Erfindung ergeben sich aus den Unteransprüchen.

Als Kern der Erfindung wird es angesehen, ein Bonbon-Spielzeug anzubieten, das mindestens vier, insbesondere aber fünf Lagen aufweist, wobei je zwei Lagen durch das Herstellungsgießverfahren untrennbar miteinander verbunden sind. Diese so hergestellten Einzelteile nach Art von Scheiben oder dgl. werden dann so aneinandergelegt, daß innere Lagen oder Teilscheiben von zwei äußeren Lagen begrenzt werden, von denen mindestens eine aus Schaumzucker ist. In dieser Stellung werden die zwei oder drei Einzelteile eingepackt und durch die Verpackung in an sich bekannter Weise aneinanderfixiert. Die Erfindung gehtvon der Erkenntnis aus, daß ein Teil der Herstellungskosten bei dem bekannten Bonbon-Spielzeug nach dem Stand der Technik dadurch aufgewendet werden muß, daß viele Einzelteile aneinandergefügt und in dieser Stellung verpackt werden müssen. Durch die Erfindung ist die Anzahl der Einzelteile stark reduziert, die Ensemblierung ist einfacher, schneller und kostengünstiger durchzuführen.

Insbesondere kann das Bonbon-Spielzeug so ausgebildet sein, daß zwischen zwei äußeren Lagen aus Schaumzucker zwischenliegenden Lagen abwechselnd aus Fruchtgummi und Schaumlagen hergestellt sind. Dadurch ergibt sich ein besonders vielfältiges Spielbonbon, das insbesondere Kinder dazu anregt, die Reihenfolge des Bonbons, das quasi einen Hamburger oder ein belegtes Brötchen imitiert, immer wieder neu zu belegen und dabei die Belag-Reihenfolge zu ändern. Dies kann trotz der vereinfachten Herstellung dadurch gemacht werden, daß die Doppellagen einfach umgedreht werden.

Die Erfindung ist anhand eines Ausführungsbeispiels in den Zeichnungsfiguren näher erläutert. Diese zeigen:
- Fig. 1: ein fünflagiges Bonbon-Spielzeug in einer auseinandergezogenen Stellung (Teilfig. a) und in verpackter Stellung (Teilfig. b);
- Fig. 2: ein fünflagiges Bonbon-Spielzeug, bei dem zwei innenliegende Lagen miteinander vergossen sind;
- Fig. 3: ein sechslagiges Bonbon-Spielzeug;
- Fig. 4: ein zweilagiges Teil eines Bonbon-Spielzeuges, bei welchem Schaummasse auf ein fischartiges Unterteil aufgegossen ist;
- Fig. 5: ein zweilagiges Teil, bei welchem eine scheibenartige Schaummasse auf einen stabartigen Trägerkörper aufgegossen ist;
- Fig. 6: eine stark vereinfachte prinzipielle Darstellung des Verfahrens zur Herstellung des erfindungsgemäßen Bonbon-Spielzeugs bzw Bestandteilen davon.

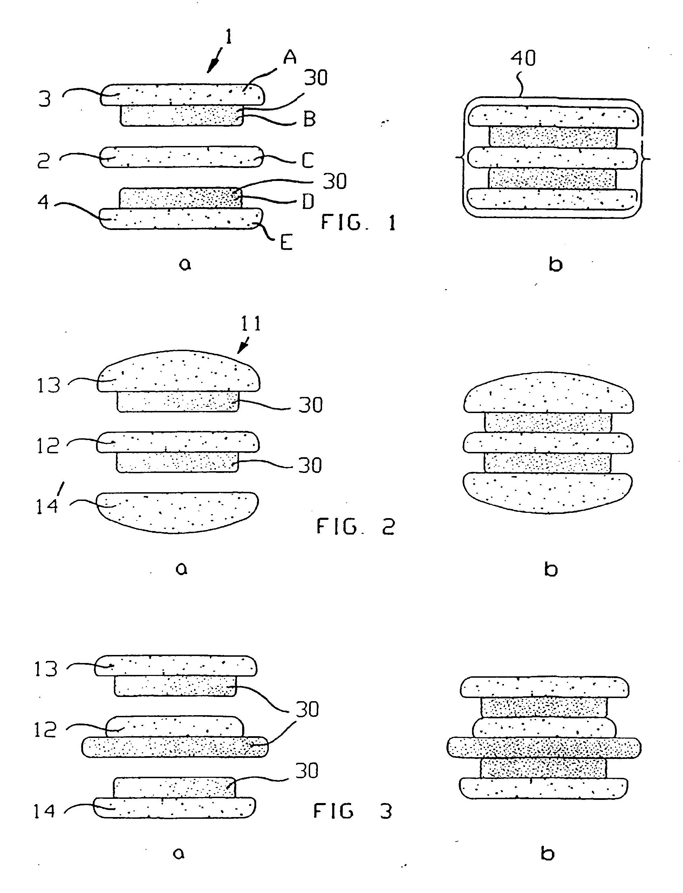

Das Bonbon-Spielzeug 1 gemäß Fig. 1 besteht aus fünf Lagen (A - E), die Lagen A, B und die Lagen D, E sind Bestandteil von doppellagigen Teilen (3, 4; 13, 14), die Lage C ist eine einfache Schaumzuckerscheibe. Die Durchmesser der Schaumzuckerlagen A, C und E stehen über die Durchmesser der Fruchtgummilagen B und D radial hinaus. Die zweilagigen Teile 3 und 4 liegen sich bezogen auf die Mittellinie der einlagigen Scheibe 2 symmetrisch gegenüber.

In Fig. 2 ist ebenfalls ein fünflagiges Bonbon-Spielzeug 11 dargestellt, allerdings ist das mittlere Teil 12 nunmehr zweilagig ausgebildet, das Teil 13 ebenfalls, das Unterteil 14' hingegen als einlagiges Teil.

Das Ausführungsbeispiel gemäß Fig. 3 ent-spricht im wesentlichen dem in Fig. 2 und trägt auch die gleichen Bezugszeichen, allerdings sind die Radien der unterschiedlichen Lagen unterschiedlich gegenüber denen in Fig. 2.

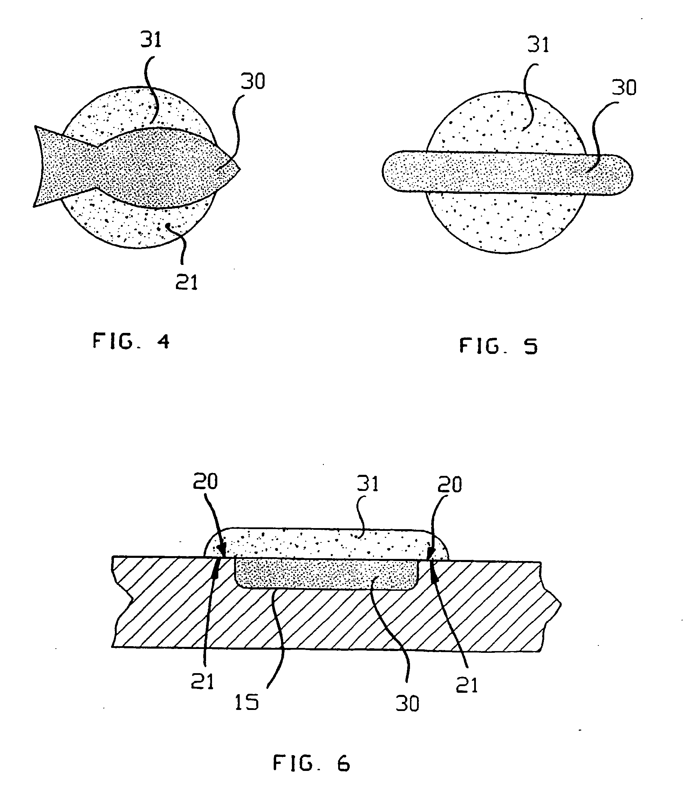

In Fig. 4 ist zu sehen, daß auf eine fischförmige Fruchtgummilage 30 eine runde Schaumzuckerlage 31 aufgegossen ist. Die Schaumzuckerlage 31 steht somit frei über die Ober- und Unterkante der Fruchtgummilage 30 hinaus, diese steht allerdings mit dem Kopf- und dem Schwanzende des daraus gebildeten Fischelementes über den Rand der Schaumzuckerlage 31 hinaus.

Interessant ist dieses Gießverfahren insofern, als es in einem unmittelbar aufeinander abfolgenden Gießvorgang gelingt, zweilagige Teile zu gießen, wobei die noch nicht abgekühlte Fruchtgummimasse mit einer darauf gegossenen Schaumzuckerkalotte versehen wird, deren Radius größer ist als der Querschnitt der vorher gegossenen Formen. Die Schaumzuckerkalotte steht somit über die gestempelte Form hinaus und liegt - wie dies in Fig. 6 deutlich zu sehen ist - mit ihren Unterseiten 21 auf den benachbart zu der in Maisstärke gestempelten Form 15 der Unterlage liegenden Oberflächenbereiche 20 der Maisstärkelage auf und härtet dort aus.

Der Aufbau des Bonbon-Spielzeuges gemäß Fig. 5 entspricht im wesentlichen dem in Fig. 4, allerdings ist die Form und Dimension der Fruchtgummilage 30 in Fig. 4 variiert.

Die als Klarsichtverpackung 40 ausgebildete Umhüllung ist lediglich in Fig. 1 dargestellt. Um die einzelnen Teile/Lagen des Bonbonspielzeuges zusammenzuhalten, wird sie auch bei den in den Figuren 2 bis 5 dargestellten Ausführungsformen angewandt.

Fig. 6 zeigt in stark vereinfachter prinzipieller Darstellungsweise die Herstellung z.B. des zweilagigen mittleren Teils 12 des Bonbon-Spielzeugs der Fig. 2. Hierbei wird die Bonbonmasse, z.B. Fruchtgummimasso in eine vorbereitete Gießform 15, welche z.B. aus verdichteter Maisstärkelage für den Fall einer Bonbonmasse in Form von Fruchtgummi bestehen kann. Hierbei wird eine Bonbonmasselage bzw. z.B. Fruchtgummilage 30 gebildet Anschließend wird eine zweite Lage, insbesondere aus Schaummasse, auf die frisch gegossene, insbesondere noch nicht ausgekühlte Bonbonmasse der ersten Lage aufgegossen. Hierdurch entsteht eine mit der ersten Lage, z.B. Fruchtgummilage 30 verbundene zweite Lage, z.B. Schaumlage 31. Anschließend wird nach gemeinsamer Abkühlung das zweilagige Teil ausgepudert und mit weiteren zweilagigen Teilen zu einem mindestens vierlagigen Bonbon-Spielzeug zusammengefügt. Danach kann eine Fixierung der beiden zweilagigen Teile durch eine Klarsichtverpakkung 40 (vgl. Fig. 1 b) erfolgen. Die Schaumlage 31 kann in unterschiedlichsten Formen, z.B. scheiben- oder kalottenförmig sowie unterschiedlichsten Farben und/oder Geschmacksrichtungen aufgegossen werden.

## Patentansprüche

1. Verfahren zur Herstellung eines Bonbon-Spielzeuges,
**gekennzeichnet durch** folgende Verfahrensschritte:
a) Stempeln von Gießformen in eine verdichtete Maisstärkelage für eine erste Lage einer Bonbonschicht aus Fruchtgummimasse,
b) Eingießen von Fruchtgummimasse in die vorbereiteten Gießformen,
c) Aufgießen einer zweiten Lage Schaummasse auf die frisch gegossene, noch nicht ausgekühlte Fruchtgummimasse der ersten Lage, derart, daß die zweite Lage Schaummasse über die gestempelte Gießform mit der ersten Lage Fruchtgummimasse hinaussteht und die Unterseite der zweiten Lage auf den benachbart zu den gestempelten Gießformen angeordneten Oberflächenbereichen der Maisstärkelage aufliegt,
d) Auspudern der nach den Verfahrensschritten a) - c) hergestellten, zweilagigen Teile nach deren gemeinsamer Auskühlung,
e) Zusammenfügen mehrerer zweilagiger Teile zu einem mindestens vierlagigen Bonbon-Spielzeug derart, daß mindestens jeweils zwei zweilagige Teile **durch** eine Klarsichtverpackung gegeneinander mit nach außen gerichteter Schaumlage fixiert werden.

## Claims

1. Process for producing a sweet-toy
**characterized by the following steps:**
a) stamping the pouring molds into a layer of compressed cornflour for a first layer of a sweet mass, in particular fruit gum mass,
b) pouring of fruit gum mass into the prepared pouring molds,
c) pouring a second layer foam mass, onto the freshly poured, not yet cooled fruit gum mass of the first layer, in such a way that the second layer foam mass extends beyond the stamped mold with the first layer of fruit gum mass and the underside of the second layer lies over the surface areas of the cornflour layer adjacent to the stamped mold,
d) powdering of the double-layer parts according to procedures a) - c) after their joint cooling.
e) assembling of a plurality of double-layer-shaped parts into a sweet-toy having at least four layers in such a way that each time at least two double layer-shaped parts are fixed to one another by means of a transparent packaging.

## Revendications

1. Procédé de fabrication d'un jouet-bonbon,
**caractérisé par** les étapes suivantes:
a) estampillage de moules dans une couche d'amidon de maïs compacte servant à une première couche d'une couche de bonbon en pâte de gomme fruitée,
b) coulée de la pâte de gomme fruitée dans les moules préparés,
c) versement d'une deuxième couche de pâte de type guimauve sur la pâte de gomme fruitée fraîchement coulée, non encore refroidie, de la première couche, de telle sorte que la deuxième couche de pâte de type guimauve dépasse du moule estampillé comprenant la première couche de pâte de type guimauve et que la face inférieure de la deuxième couche repose sur les zones de surface de la couche d'amidon de maïs disposées à côté des moules estampillés,
d) poudrage des pièces à deux couches fabriquées selon les étapes a) - c) après leur refroidissement commun,
e) assemblage de plusieurs pièces à deux couches en un jouet-bonbon à au moins quatre couches de telle qu'au moins respectivement deux pièces à deux couches sont fixées les unes contre les autres par un emballage transparent, avec la couche de guimauve dirigée vers l'extérieur.
